# EUROPÄISCHE PATENTSCHRIFT

(11) **EP 2 866 107 B1**
(45) Veröffentlichungstag und Bekanntmachung des Hinweises auf die Patenterteilung: **09.12.2020**
(21) Anmeldenummer: 13190307.2
(22) Anmeldetag: 25.10.2013
(51) Int. Cl.: G05B 19/05, G06F 11/14, G06F 11/36

(54) **Verfahren zum Wiedergeben des Ablaufs eines Programms eines Automatisierungsgerätes**
Method for reproducing the sequence of a programme of an automation device
Procédé de restitution de la séquence d'un programme d'un appareil d'automatisation

(43) Veröffentlichungstag der Anmeldung: 29.04.2015
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- US-A1- 2002 087 950
- US-A1- 2010 249 956
- US-A1- 2013 036 403
- CORNELIS: "A Taxonomy of Execution Replay Systems", INTERNATIONAL CONFERENCE ON ADVANCES IN INFRASTRUCTURE FORELECTRONIC BUSINESS, EDUCATION, SCIENCE, MEDICINE AND MOBILETECHNOLOGIES ON THE INTERNET, XX, XX, 1. Januar 2003 (2003-01-01), XP002435057,

## Beschreibung

Die Erfindung betrifft ein Verfahren zum Wiedergeben des Ablaufs eines zur Prozesssteuerung vorgesehenen Steuerprogramms eines Automatisierungsgerätes. Darüber hinaus betrifft die Erfindung eine Anordnung mit einem Automatisierungsgerät und ein Backup-Gerät, welche zur Durchführung des Verfahrens geeignet ist.

Im Automatisierungsumfeld ist es häufig gewünscht, das Verhalten eines Automatisierungsgerätes weitgehend nachvollziehen bzw. nachträglich Daten und deren Veränderungen auswerten zu können. Beispielsweise möchte ein Anwender ein für ein Automatisierungsgerät erstelltes Steuerprogramm testen bzw. während der Prozesssteuerung aufgetretene Fehler - insbesondere auch sporadisch oder gar nur einmalig aufgetretene Fehler - schnell und sicher finden. Ferner ist es Ziel eines Herstellers oder eines Lieferanten von Automatisierungsgeräten, Fehler in einer Firmware der Automatisierungsgeräte oder in einem für die Geräte vorgesehenen Systemprogramm schnell zu erkennen und zu beheben. Auch kann es erforderlich sein, einem Anwender nachzuweisen, dass weder die Firmware noch ein Systemprogramm die Ursache eines aufgetretenen Fehlers ist, sondern ein fehlerbehaftetes bzw. fehlerhaft erstelltes Anwender- bzw. Steuerprogramm. Um derartige Fehler oder ein derartiges Verhalten zu untersuchen, sind so genannte Trace-Mechanismen vorgesehen, mittels welcher allerdings nicht alle Variablen und deren Veränderungen aufgezeichnet werden können.

Es kann auch vorkommen, dass ein Anlagenbetreiber die Qualität eines z. B. vor Monaten oder Jahren hergestellten Produktes nachträglich nachweisen muss. Üblicherweise wird der Betreiber ausgewählte Produktionsdaten z. B. mittels eines Bedien- und Beobachtungssystems archivieren. Die archivierten Daten sind allerdings im konkreten Einzelfall u. U. nicht ausreichend, um die Produktqualität zu bewerten. Die vollständige Nachvollziehbarkeit ist mit bekannten Mitteln bzw. Maßnahmen der Archivierung nicht zu verwirklichen.

US 2013/0036403 A1 offenbart ein Verfahren sowie ein Gerät zum "Debuggen" eines Programms, wobei eine Vielzahl von Momentaufnahmen des Programms zur Verarbeitung mittels eines weiteren Gerätes vorgesehen ist.

Der Erfindung liegt daher die Aufgabe zugrunde, ein Verfahren der eingangs genannten Art anzugeben, mittels welchem der Ablauf eines zur Prozessteuerung vorgesehenen Programms bzw. Steuerprogramms eines Automatisierungsgerätes wiedergegeben werden kann. Darüber hinaus ist eine Anordnung mit einem Automatisierungsgerät und einem Backup-Gerät zu schaffen, welches zur Durchführung des Verfahrens geeignet ist.

Diese Aufgabe wird im Hinblick auf das Verfahren durch die im Anspruch 1 angegebenen, bezüglich der Anordnung durch die im Anspruch 8 angegebenen Maßnahmen gelöst.

Vorteilhaft ist, dass ein zu beliebigen Zeitpunkten in der Vergangenheit aufgetretener Zustand des Automatisierungsgerätes vollständig wiedergegeben und sichtbar gemacht werden kann. Es wird ermöglicht, die Aufzeichnung sämtlicher Abläufe des Automatisierungsgerätes auf dem Backup-Gerät, z. B. eines Remote-Servers, zu bewerkstelligen. Diese Aufzeichnung bildet die komplette Historie des Automatisierungsgerätes ab, beispielsweise die Historie einer Kunden-PLC. Dies ermöglicht bzgl. des Programmablaufs auf dem Backup-Gerät jeden beliebigen Zeitpunkt in der Vergangenheit nachträglich und wiederholt anzufahren und alle zugehörigen Daten auszulesen.

Zu einem vorbestimmten Zeitpunkt erstellt das Automatisierungsgerät ein Abbild seiner relevanten Daten, die den internen Zustand des Automatisierungsgerätes zu diesem Zeitpunkt repräsentieren, wobei diese Daten in einen Backup-Speicher hinterlegt werden. Dieser Backup-Speicher kann als eigenständiges Gerät ausgebildet oder Bestandteil des Backup-Gerätes sein, beispielsweise einer Backup-PLC, einer "Schatten-PLC" oder eines Backup-Servers. Dieser interne Zustand wird im Wesentlichen durch statische und dynamische Daten, Datenbausteine, Prozesseingangswerte, Prozessausgangswerte sowie Konfigurationsdaten bestimmt bzw. vorgegeben. Ferner hinterlegt das Automatisierungsgerät während der Prozesssteuerung, d. h. während der Verarbeitung seines Steuerprogramms zur Steuerung eines technischen Prozesses oder einer zu steuernden Anlage Freigaben und Prozesseingangswerte in den Backup-Speicher, wobei die Freigaben anzeigen, welche Verarbeitungsabschnitte des Steuerprogramms das Automatisierungsgerät bereits verarbeitet hat.

Zum Wiedergeben des Ablaufs des (Steuer-)Programms des Automatisierungsgerätes liest das Backup-Gerät das Abbild sowie die Freigaben und die Prozesseingangswerte aus dem Backup-Speicher aus. Aufgrund dessen, dass das Backup-Programm im Hinblick auf die Prozesssteuer-Funktionalität dem Programm des Automatisierungsgerätes entspricht, ist das Backup-Gerät mittels des Abbildes, der Freigaben und der Prozesseingangswerte in der Lage, die gleichen Programmpfade seines Backup-Programms zu durchlaufen, welche das Programm des Automatisierungsgerätes in der Vergangenheit bereits durchlaufen hat.

Es wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungsgerätes gewöhnlich in Prioritätsklassen eingeteilt sind und gemäß ihrer zugeordneten Priorität bearbeitet bzw. ausgeführt werden.

In einer Ausgestaltung der Erfindung ist vorgesehen, dass während der Verarbeitung des Programms des Automatisierungsgerätes - im Folgenden als AG-Programm bezeichnet - das Backup-Gerät das Backup-Programm verarbeitet, was bedeutet, dass der Nachlauf sehr gering ist und das Backup-Programm im Hinblick auf die Verarbeitung des AG-Programms "schritthalten" kann und die Backup-Programmdurchläufe zeitlich asynchron zu den AG-Programmdurchläufen erfolgen. Der wiederzugebende bzw. zu rekonstruierende Ablauf der bereits verarbeiteten Verarbeitungsabschnitte des AG-Programms kann schnell erreicht werden. Verschiedene Nutzergruppen, z. B. Programmierer, Service-Techniker, Anlagenbetreiber, Hersteller etc., können somit in die Lage versetzt werden Abläufe, Zustände und/oder Daten des AG-Programms lückenlos nachzuvollziehen, um insbesondere sporadische oder einmalige Vorkommnisse in der Vergangenheit analysieren und dokumentieren zu können.

Gemäß einer weiteren Ausgestaltung der Erfindung verarbeitet das Backup-Gerät sein Backup-Programm nach der Verarbeitung des AG-Programms. Beispielsweise erfolgt der Backup-Programmdurchlauf je nach Bedarf erst nach Tagen, Wochen, Monaten oder sogar Jahren. Auch hier können die verschiedenen Nutzergruppen in die Lage versetzt werden Abläufe, Zustände und/oder Daten des AG-Programms lückenlos nachzuvollziehen, um insbesondere sporadische oder einmalige Vorkommnisse in der Vergangenheit analysieren und dokumentieren zu können.

Es kann vorkommen, dass ein AG-Programm über einen sehr langen Zeitraum (Monate, Jahre) einen technischen Prozess steuert, wodurch der Datenbestand im Backup-Speicher sehr hoch ist. Um schnell ein "Vor- oder Zurückspulen" im Backup-Programm bewerkstelligen zu können, ist daher vorgesehen, dass zu einem ersten Zeitpunkt ein Initialabbild und zu weiteren Zeitpunkten Zwischenabbilder erzeugt und in den Backup-Speicher hinterlegt werden. Diese weiteren Zwischenabbilder repräsentieren weitere interne Zustände des Backup-Gerätes zu diesen Zeitpunkten, die den internen Zuständen des Automatisierungsgerätes entsprechen. Für den Fall, dass z. B. zu einem weiteren Zeitpunkt tx ein Zwischenabbild erzeugt und hinterlegt wird, kann der Ablauf des Backup-Programms von einem Zeitpunkt tx+td wiedergegeben werden, indem das Backup-Programm zum Zeitpunkt tx "zurück- oder vorgespult" wird und die Verarbeitung des Backup-Programms ab dem Zeitpunkt tx gestartet wird. Das Backup-Programm braucht daher nicht beginnend mit dem Initialabbild zu starten, sondern erst mit dem Zwischenabbild, wodurch der wiederzugebende bzw. zu rekonstruierende Ablauf verkürzt wird.

Derartige weitere Zwischenabbilder können sowohl von dem Backup-Gerät als auch von dem Automatisierungsgerät erstellt und im Backup-Speicher hinterlegt werden. In beiden Fällen wird ein schnelles "Vor- und Zurückspulen" im Backup-Programm und somit ein Wiedergeben des AG-Programmablaufs ermöglicht. Allerdings wird im letztgenannten Fall das Automatisierungsgerät während der Prozessteuerung zusätzlich belastet.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Automatisierungssystem und
- Figur 2: eine zeitlich asynchrone Kopplung eines Automatisierungs- und eines Backup-Gerätes.

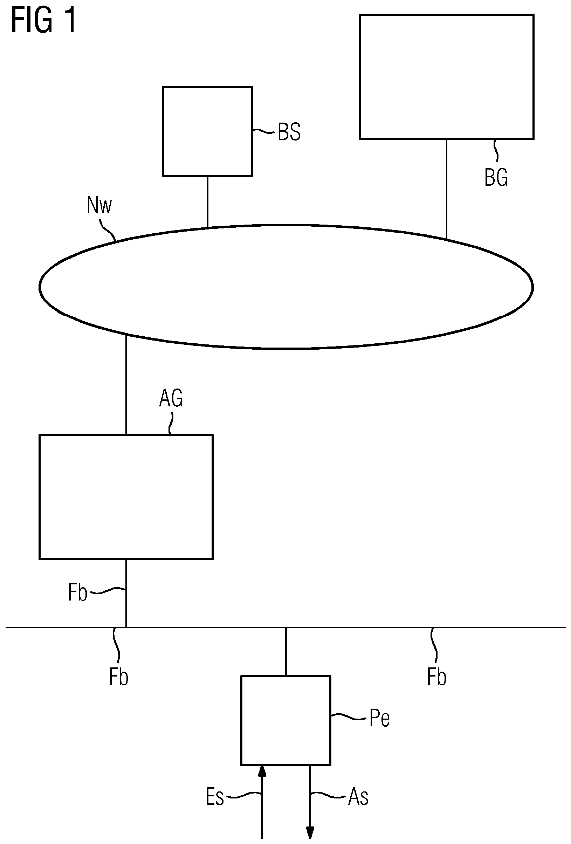

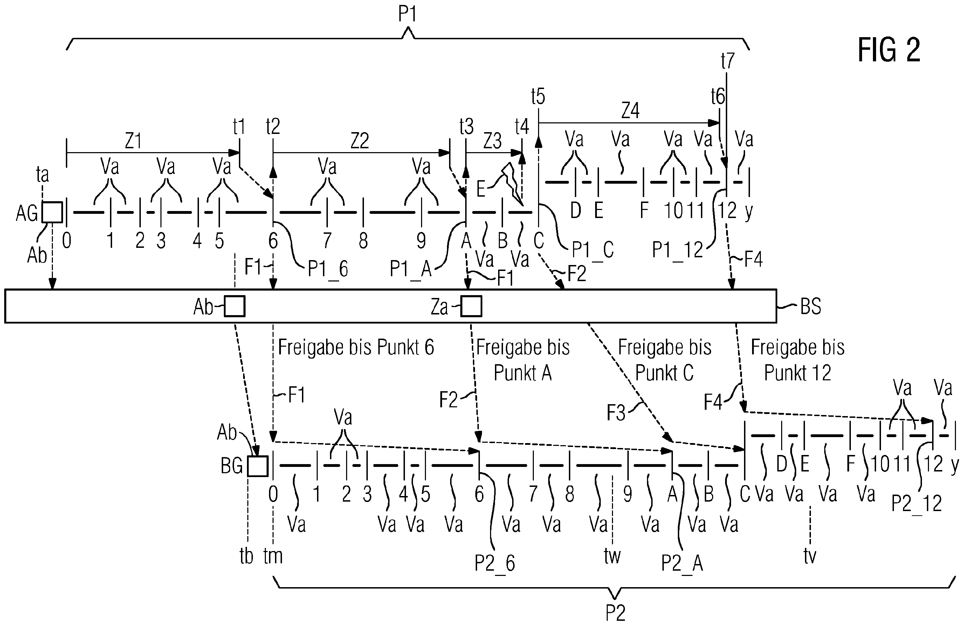

Die in den Figuren 1 und 2 gleichen Teile sind mit gleichen Bezugszeichen versehen.

In Figur 1 sind in vereinfachter Form Bestandteile eines Automatisierungssystems dargestellt. Dieses Automatisierungssystem ist versehen mit einem Automatisierungsgerät AG, einem Backup-Gerät BG, einem Backup-Speicher BS sowie mit einer über einen Feldbus Fb mit dem Automatisierungsgerät AG verbundenen Peripherieeinheit Pe, wobei der Feldbus Fb beispielsweise die PROFIBUS-DP-Spezifikation erfüllt. Prinzipiell sind auch andere Bussysteme, z. B. Ethernet, Fieldbus, Modbus, ProfiNet IO oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit halber nicht dargestellt. Das Automatisierungsgerät AG sowie das Backup-Gerät BG und der Backup-Speicher BS, der als eigenständiges Gerät ausgebildet oder Bestandteil des Backup-Gerätes BG sein kann, tauschen Informationen über eine weitere Kommunikationsverbindung aus, beispielsweise über eine Kommunikationsverbindung in Form eines globalen und/oder firmeneigenen Netzwerkes Nw.

Zum besseren Verständnis der Erfindung wird im Folgenden eine zeitlich asynchrone Kopplung eines Automatisierungsgerätes mit einem Backup-Gerät näher erläutert, wobei beide Geräte ereignissynchron gleiche Programmpfade, z. B. aufgrund eines Ereignisses in Form eines Prozessalarms, durchlaufen. Das Automatisierungsgerät AG ist zur Steuerung eines technischen Prozesses (Prozesssteuerung) vorgesehen und verarbeitet dazu ein Steuerprogramm P1 - im Folgenden mit AG-Programm bezeichnet -, das Backup-Gerät BG ist zum Wiedergeben bzw. zur Wiedergabe des Ablaufs des Steuerprogramms P1 des Automatisierungsgerätes AG zu vorgegebenen, vorgebbaren bzw. vorbestimmten Zeitpunkten vorgesehen und ist dazu mit einem im Hinblick auf die Prozesssteuerung entsprechenden Steuerprogramm P2 - im Folgenden als Backup-Programm oder BG-Programm bezeichnet - versehen.

Es wird angenommen, dass ab einem vorgegebenen bzw. vorbestimmten Zeitpunkt ta das Automatisierungsgerät AG ein Abbild Ab seiner relevanten Daten erstellt, welche seinen internen Zustand zu diesem Zeitpunkt ta repräsentieren. Dieser interne Zustand ist im Wesentlichen durch statische und dynamische Daten, Datenbausteine, Prozesseingangswerte, Prozessausgangswerte sowie Konfigurationsdaten bestimmt bzw. vorgegeben. Das Automatisierungsgerät AG hinterlegt dieses Abbild Ab in den Backup-Speicher BS, wobei dieses als erstes hinterlegtes Abbild Ab im Backup-Speicher BS ein Initialabbild repräsentiert. Zu einem Zeitpunkt tb, der z. B. Tage oder Monate später als der Zeitpunkt ta sein kann, liest das Backup-Gerät BG aus dem Backup-Speicher BS das Abbild Ab, verarbeitet dieses Abbild Ab und weist somit nach der Verarbeitung dieses Abbildes Ab den gleichen internen Zustand auf wie das Automatisierungsgerät AG zum Zeitpunkt der Abbild-Erstellung. Die Übertragung des Abbildes Ab mittels des Automatisierungsgerätes AG kann selbstverständlich auch während der Programmverarbeitung regelmäßig in einem bestimmten Zeitintervall erfolgen, was allerdings eine höhere Belastung des Automatisierungsgerätes AG während der Prozesssteuerung bedeutet.

Beide Programme P1, P2 weisen eine Vielzahl von Verarbeitungsabschnitten Va unterschiedlicher Zeitdauer auf, wobei die Programme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Programm P1, P2 mittels des jeweiligen Gerätes AG, BG unterbrochen werden. Das Automatisierungsgerät AG unterbricht z. B. an diesen Unterbrechungsstellen 0, 1, 2, ... y das Programm P1, um dem Backup-Speicher BS Freigaben und/oder Prozesseingangswerte zu übermitteln und in diesen Backup-Speicher BS zu hinterlegen. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervall Zi folgenden Unterbrechungsstelle -, übermittelt das Automatisierungsgerät AG dem Backup-Speicher BS eine Freigabe bzw. ein Freigabesignal und der Übersichtlichkeit halber hier nicht dargestellte Prozesseingangswerte, wobei die Freigabe anzeigt, bis zu welchem Verarbeitungsabschnitt Va das AG-Programm P1 verarbeitet hat. Diese Verarbeitungsabschnitte Va des BG-Programms P2 entsprechen denen, die das Automatisierungsgerät AG bereits während der Verarbeitung des AG-Programms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, das Automatisierungsgerät AG eine Freigabe F1 in den Backup-Speicher BS hinterlegt. Im Rahmen einer späteren Verarbeitung dieser Freigabe F1 mittels des Backup-Gerätes BG zu einem Zeitpunkt tm zeigt diese Freigabe F1 dem Backup-Gerät BG an, dass das Backup-Gerät BG sein zu verarbeitendes Backup-Programm P2 bis zu einer Unterbrechungsstelle P2_6 (Unterbrechungsstelle 6) verarbeiten darf, wobei die Unterbrechungsstelle P2_6 des BG-Programms P2 der Unterbrechungsstelle P1_6 des AG-Programms P1 entspricht. Dies bedeutet, dass aufgrund der Freigabe F1 das Backup-Gerät BG die Verarbeitungsabschnitte Va des BG-Programms P2 verarbeiten kann, welche den Verarbeitungsabschnitten Va des AG-Programms P1 bis zum Zeitpunkt der Erzeugung der Freigabe F1 bzw. des Freigabesignals entsprechen, wobei im Beispiel der Einfachheit halber angenommen wird, dass der Zeitpunkt der Erzeugung der Freigabe F1 dem Zeitpunkt der Übermittlung der Freigabe F1 zum Backup-Speicher BS entspricht. Die Verarbeitung dieser Verarbeitungsschritte Va mittels des Backup-Gerätes BG erfolgt also zeitlich asynchron zur Verarbeitung der entsprechenden Verarbeitungsabschnitte Va mittels des Automatisierungsgerätes AG, wobei nach der Verarbeitung der Verarbeitungsabschnitte Va des BG-Programms P2 durch das Backup-Gerät BG eine Bearbeitung von weiteren Verarbeitungsabschnitten Va mittels des Backup-Gerätes BG nur dann erfolgt, wenn das Automatisierungsgerät AG weitere Freigaben und Prozesseingangswerte im Backup-Speicher BS hinterlegt und das Backup-Gerät BG diese Freigaben und Prozesseingangswerte aus dem Backup-Speicher BS ausliest und verarbeitet.
Der Zeitpunkt des Auftretens dieser Unterbrechungsstelle P1_6 (Unterbrechungsstelle 6) repräsentiert den Beginn eines auf das Zeitintervall Z1 folgenden Zeitintervalls Z2.

In der beschriebenen Art und Weise erfolgt die weitere Verarbeitung des AG-Programms P1. Zu einem Zeitpunkt t3 des Auftretens einer ersten Unterbrechungsstelle P1_A nach Ablauf des Zeitintervalls Z2 übermittelt das Automatisierungsgerät AG dem Backup-Speicher BS eine weitere Freigabe F2, die anzeigt, dass das Automatisierungsgerät AG weitere Verarbeitungsabschnitte Va bis zu der Unterbrechungsstelle P1_A verarbeitet hat. Nachdem das Backup-Gerät BG diese Freigabe F2 aus dem Backup-Speicher BS ausgelesen hat, verarbeitet das Backup-Gerät BG die Verarbeitungsabschnitte Va seines BG-Programms P2, die den Verarbeitungsabschnitten Va des AG-Programms P1 entsprechen, welche das Automatisierungsgerät AG vom Zeitpunkt t2 bis zum Zeitpunkt t3, also bis zur Unterbrechungsstelle P1_A, verarbeitet hat. Dies bedeutet, dass das Backup-Gerät BG die Verarbeitungsabschnitte Va des BG-Programms P2 von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches das Automatisierungsgerät AG während des Zeitintervalls Z3 zu einem Zeitpunkt t4 geeignet nach Maßgabe des AG-Programms P1 reagieren muss. In diesem Fall übermittelt das Automatisierungsgerät AG dem Backup-Speicher BS eine Freigabe F3 nicht zu einem Zeitpunkt des Auftretens einer nach dem Zeitintervall Z3 folgenden Unterbrechungsstelle, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Backup-Speicher BS übermittelten Freigabe F3 verarbeitet das Backup-Gerät BG - nachdem das Backup-Gerät BG diese Freigabe F3 ausgelesen hat - die Verarbeitungsabschnitte Va des BG-Programms P2, welche den Verarbeitungsabschnitten Va des AG-Programms P1 entsprechen, welche das Automatisierungsgerät AG zwischen den Zeitpunkten t3 und t5 bereits verarbeitet hat.

Aufgrund des Ereignisses E verarbeitet das Automatisierungsgerät AG während des Zeitintervalls Z4 Verarbeitungsabschnitte Va höherer Priorität, z. B. vollzieht das Automatisierungsgerät AG einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Das Backup-Gerät BG liest die Freigabe F4 aus und verarbeitet aufgrund dieser Freigabe F4 ebenfalls Verarbeitungsabschnitte Va bis zu einer Unterbrechungsstelle P2_12 (Unterbrechungsstelle 12) des BG-Programms P2, wobei diese Verarbeitungsabschnitte Va den Verarbeitungsabschnitten Va des Steuerprogramms P1 zwischen den Zeitpunkten t5 und t7 entsprechen und wobei das Backup-Gerät BG ebenfalls einen Threadwechsel vollzieht.

Wie erläutert, versetzen die Freigaben und die Prozesseingangswerte des Automatisierungsgerätes AG das Backup-Gerät BG in die Lage, das gleiche "Threadgebirge" wie das Automatisierungsgerät AG zu durchlaufen, was bedeutet, dass das Backup-Gerät BG einen "Threadwechsel" an einer Stelle im BG-Programm P2 vornimmt, die der Stelle des Threadwechsels im AG-Programm P1 entspricht. Zu einem beliebigen Zeitpunkt kann das BG-Programm P2 gestartet werden, wobei mittels der im Backup-Speicher BS hinterlegten Freigaben F1 bis F4, der Prozesseingangswerte und des Initialabbildes Ab das BG-Programm P2 mit der Freigabe F1 ab dem Punkt 0 gestartet wird.

Um ein schnelles "Vor- oder Zurückspulen" des Backup-Programms P2 zu bewerkstelligen, werden zusätzlich zu dem Initialabbild Ab Zwischenabbilder erzeugt und in den Backup-Speicher BS hinterlegt. Beispielsweise ist das BG-Programm P2 mit einer Anweisung und/oder einem Befehl versehen, aufgrund dessen nach einem von einem Anwender angestoßenen Start des BG-Programms P2 zum Zeitpunkt tb und nach der Verarbeitung der Verarbeitungsabschnitte Va des BG-Programms P2 bis zur Unterbrechungsstelle P2_6 (aufgrund der Freigabe F1) ein Zwischenabbild Za erzeugt und in den Backup-Speicher BS hinterlegt wird. Selbstverständlich kann das BG-Programm P2 mit einer weiteren Anweisung und/oder einem weiteren Befehl versehen sein, wodurch nach der Verarbeitung der Verarbeitungsabschnitte Va des BG-Programms P2 bis zu einer weiteren Unterbrechungsstelle ein weiteres Zwischenabbild erzeugt und in den Backup-Speicher BS hinterlegt wird. Dieses Zwischenabbild Za repräsentiert interne Zustände des Automatisierungsgerätes AG in der Vergangenheit und zwar zum Zeitpunkt t3.

Für den Fall, dass ein Anwender z. B. den Verlauf des AG-Programms P1 ab einem Zeitpunkt tw betrachten bzw. analysieren will, kann er das BG-Programm P2 unter Berücksichtigung des Zwischenabbildes Za, also beginnend ab der Unterbrechungsstelle P2_6 starten, wobei aufgrund der hinterlegten Freigaben F3, F4 und der Prozesseingangswerte das BG-Programm P2 - wie beschrieben - verarbeitet wird.

Mittels des Zwischenabbildes Za wird ermöglicht, dass z. B. der Verlauf des BG-Programms P2 zu einem Zeitpunkt tv betrachtet werden kann. Auch in diesem Fall braucht der Anwender aufgrund des Zwischenabbildes Za das BG-Programm P2 erst ab der Unterbrechungsstelle P2_6 beginnend zu starten, welche der Unterbrechungsstelle P1_6 entspricht, um den Verlauf des BG-Programms P2, das dem Verlauf des AG-Programms P1 entspricht, betrachten bzw. analysieren zu können.

Selbstverständlich ist es möglich, dass das Automatisierungsgerät AG während der Verarbeitung seines AG-Programms P1 ein derartiges Zwischenabbild Za erstellt und in den Backup-Speicher BS hinterlegt. Auch in diesem Fall wird ein schnelles "Vor- und Zurückspulen" im Backup-Programm P2 und somit ein Wiedergeben des AG-Programmablaufs ermöglicht, wobei allerdings während der Verarbeitung des AG-Programms P1 das Automatisierungsgerät AG während der Prozessteuerung zusätzlich belastet wird.

## Patentansprüche

1. Verfahren zum Wiedergeben des Ablaufs eines zur Prozesssteuerung vorgesehenen Steuerprogramms (P1) eines Automatisierungsgerätes (AG), wobei
- auf einem Backup-Gerät (BG) ein Steuerprogramm (P2) hinterlegt ist, welches im Hinblick auf die Prozesssteuerung dem Steuerprogramm (P1) des Automatisierungsgerätes (AG) inhaltlich entspricht, wobei das Backup-Gerät (BG) zum Wiedergeben des Ablaufs des Steuerprogramms (P1) vorgesehen ist,
- mittels des Automatisierungsgerätes (AG) während der Prozesssteuerung zu mindestens einem vorgegebenen oder vorgebbaren Zeitpunkt ein Abbild (Ab) in einen Backup-Speicher (BS) hinterlegt wird, wobei das Abbild (Ab) einen internen Zustand des Automatisierungsgerätes (AG) zu diesem Zeitpunkt repräsentiert,
- mittels des Automatisierungsgerätes (AG) während der Prozesssteuerung jeweils nach Ablauf eines vorgegebenen Zeitintervalls (Zi, i=1, 2,...) dem Backup-Gerät (BG) eine Freigabe (F1, F2, ...) übermittelt wird, wobei die Freigaben (F1, F2, F3, F4) und Prozesseingangswerte in den Backup-Speicher (BS) hinterlegt werden und wobei die Freigaben (F1, F2, F3, F4) anzeigen, welche Verarbeitungsabschnitte (Va) des Steuerprogramms (P1) des Automatisierungsgerätes (AG) das Automatisierungsgerät (AG) bereits verarbeitet hat und dem Backup-Gerät anzeigen,
- mittels des Backup-Gerätes (BG) das Abbild (Ab) sowie die Freigaben (F1, F2, F3, F4) und die Prozesseingangswerte aus dem Backup-Speicher (BS) ausgelesen werden,
- mittels des Backup-Gerätes (BG) aufgrund der Freigaben (F1, F2, F3, F4) und der Prozesseingangswerte Verarbeitungsabschnitte (Va) seines Steuerprogramms (P2), welche den bereits verarbeiteten Verarbeitungsabschnitten (Va) des Steuerprogramms (P1) des Automatisierungsgerätes (AG) entsprechen, unter Berücksichtigung des Abbilds (Ab) verarbeitet werden,
**dadurch gekennzeichnet, dass** das Automatisierungsgerät (AG) nach dem Auftreten eines Ereignisses (E) während eines Zeitintervalls (Z4) Verarbeitungsschritte (Va) höherer Priorität verarbeitet und innerhalb des Zeitintervalls (Z4) zu einem ersten Zeitpunkt (t5) einen Threadwechsel vollzieht, wobei das Automatisierungsgerät (AG) nach Ablauf des Zeitintervalls (Z4) dem Backup-Gerät (BG) die Freigabe (F4) zu einem Zeitpunkt (t7) übermittelt, zu welchem eine erste auf das Zeitintervall (Z4) folgende erste Unterbrechungsstelle (P1_12) des Steuerprogramms (P1) auftritt, und wobei das Backup-Gerät (BG) die Freigabe (F4) ausliest und aufgrund dieser Freigabe (F4) Verarbeitungsabschnitte (Va) bis zu einer zweiten Unterbrechungsstelle (P2_12) des BG-Programms (P2) verarbeitet, wobei diese Verarbeitungsabschnitte (Va) den Verarbeitungsabschnitten (Va) des Steuerprogramms (P1) zwischen den ersten (t5) und zweiten (t7) Zeitpunkten entsprechen und wobei das Backup-Gerät (BG) ebenfalls einen Threadwechsel vollzieht.

2. Verfahren nach Anspruch 1, **dadurch gekennzeichnet, dass** das Steuerprogramm des Backup-Gerätes (P2) mittels des Backup-Gerätes (BG) während der Verarbeitung des Steuerprogramms (P1) des Automatisierungsgerätes (AG) verarbeitet wird.

3. Verfahren nach Anspruch 1, **dadurch gekennzeichnet, dass** das Steuerprogramm (P2) des Backup-Gerätes (BG) mittels des Backup-Gerätes (BG) nach der Verarbeitung des Steuerprogramms (P1) des Automatisierungsgerätes (AG) verarbeitet wird.

4. Verfahren nach einem der Ansprüche 1 bis 3, **dadurch gekennzeichnet, dass** mittels des Automatisierungsgerätes (AG) während der Verarbeitung des Steuerprogramms (P1) des Automatisierungsgerätes (AG) zu einem ersten Zeitpunkt ein Initialabbild erzeugt wird.

5. Verfahren nach Anspruch 4, **dadurch gekennzeichnet, dass** mittels des Backup-Gerätes (BG) während der Verarbeitung des Steuerprogramms (P2) des Backup-Gerätes (BG) zu weiteren Zeitpunkten Zwischenabbilder (Za) erzeugt und in den Backup-Speicher (BS) hinterlegt werden.

6. Verfahren nach Anspruch 4, **dadurch gekennzeichnet, dass** mittels des Automatisierungsgerätes (AG) zu weiteren Zeitpunkten Zwischenabbilder (Za) erzeugt und in den Backup-Speicher (BS) hinterlegt werden.

7. Verfahren nach einem der Ansprüche 1 bis 6, **dadurch gekennzeichnet, dass** das Automatisierungsgerät (AG) und/oder das Backup-Gerät (BG) und/oder der Backup-Speicher (BS) über ein globales Netzwerk (Nw) miteinander verbunden werden.

8. Anordnung mit einem Automatisierungsgerät (AG) und einem Backup-Gerät (BG), wobei das Automatisierungsgerät (AG) ein in diesem Automatisierungsgerät (AG) hinterlegtes Steuerprogramm (P1) zur Prozesssteuerung verarbeitet und auf einem Backup-Gerät (BG) ein Steuerprogramm (P2) hinterlegt ist, welches im Hinblick auf die Prozesssteuerung dem Steuerprogramm (P1) des Automatisierungsgerätes (AG) inhaltlich entspricht, wobei das Backup-Gerät (BG) zum Wiedergeben des Ablaufs des Steuerprogramms (P1) vorgesehen ist, wobei
- das Automatisierungsgerät (AG) dazu ausgebildet ist, während der Prozesssteuerung zu mindestens einem vorgegebenen oder vorgebbaren Zeitpunkt ein Abbild (Ab) seines internen Zustands in einen Backup-Speicher (BS) zu hinterlegen,
- das Automatisierungsgerät (AG) ferner dazu ausgebildet ist, während der Prozesssteuerung jeweils nach Ablauf eines vorgegebenen Zeitintervalls (Zi, i=1, 2,...) oder nach dem Auftreten eines Ereignisses (E) dem Backup-Gerät (BG) eine Freigabe (F1, F2, ...) zu übermitteln und die Freigaben (F1, F2, F3, F4) und Prozesseingangswerte in den Backup-Speicher (BS) zu hinterlegen, wobei die Freigaben (F1, F2, F3, F4) anzeigen, welche Verarbeitungsabschnitte (Va) des Steuerprogramms (P1) das Automatisierungsgerät (AG) bereits verarbeitet hat,
- das Backup-Gerät (BG) dazu ausgebildet ist, das Abbild (Ab) sowie die Freigaben (F1, F2, F3, F4) und die Prozesseingangswerte aus dem Backup-Speicher (BS) auszulesen,
- das Backup-Gerät (BG) ferner dazu ausgebildet ist, aufgrund der Freigaben (F1, F2, F3, F4) und der Prozesseingangswerte Verarbeitungsabschnitte (Va) seines Steuerprogramms (P2), welche den bereits verarbeiteten Verarbeitungsabschnitten (Va) des Steuerprogramms (P1) des Automatisierungsgerätes (AG) entsprechen, unter Berücksichtigung des hinterlegten Abbildes (Ab) zu verarbeiten,
**dadurch gekennzeichnet, dass** das Automatisierungsgerät (AG) dazu ausgebildet ist, nach dem Auftreten eines Ereignisses (E) während eines Zeitintervalls (Z4) Verarbeitungsschritte (Va) höherer Priorität zu verarbeiten und innerhalb des Zeitintervalls (Z4) zu einem ersten Zeitpunkt (t5) einen Threadwechsel zu vollziehen, wobei das Automatisierungsgerät (AG) weiter dazu ausgebildet ist, nach Ablauf des Zeitintervalls (Z4) dem Backup-Gerät (BG) die Freigabe (F4) zu einem Zeitpunkt (t7) zu übermitteln, zu welchem eine erste auf das Zeitintervall (Z4) folgende erste Unterbrechungsstelle (P1_12) des Steuerprogramms (P1) auftritt, und wobei das Backup-Gerät (BG) dazu ausgebildet ist, die Freigabe (F4) auszulesen und aufgrund dieser Freigabe (F4) Verarbeitungsabschnitte (Va) bis zu einer zweiten Unterbrechungsstelle (P2_12) des BG-Programms (P2) zu verarbeiten, wobei diese Verarbeitungsabschnitte (Va) den Verarbeitungsabschnitten (Va) des Steuerprogramms (P1) zwischen den ersten (t5) und zweiten (t7) Zeitpunkten entsprechen und wobei das Backup-Gerät (BG) ebenfalls dazu ausgebildet ist, einen Threadwechsel zu vollziehen.

9. Anordnung nach Anspruch 8, **dadurch gekennzeichnet, dass** das Backup-Gerät (BG) dazu ausgebildet ist, sein Steuerprogramm (P2) während der Verarbeitung des Steuerprogramms (P1) des Automatisierungsgerätes (AG) zu verarbeiten.

10. Anordnung nach Anspruch 8, **dadurch gekennzeichnet, dass** das Backup-Gerät (BG) dazu ausgebildet ist, sein Steuerprogramm (P2) nach der Verarbeitung des Steuerprogramms (P1) des Automatisierungsgerätes (AG) zu verarbeiten.

11. Anordnung nach Anspruch 8 bis 10, **dadurch gekennzeichnet, dass** das Automatisierungsgerät (AG) dazu ausgebildet ist, während der Verarbeitung seines Steuerprogramms (P1) zu einem ersten Zeitpunkt ein Initialabbild zu erzeugen.

12. Anordnung nach Anspruch 11, **dadurch gekennzeichnet, dass** das Backup-Gerät (BG) dazu ausgebildet ist, während der Verarbeitung seines Steuerprogramms (P2) zu weiteren Zeitpunkten Zwischenabbilder (Za) zu erzeugen.

13. Anordnung nach Anspruch 11, **dadurch gekennzeichnet, dass** das Automatisierungsgerät (AG) dazu ausgebildet ist, zu weiteren Zeitpunkten Zwischenabbilder (Za) zu erzeugen.

14. Anordnung nach einem der Ansprüche 7 bis 13, **dadurch gekennzeichnet, dass** das Automatisierungsgerät (AG) und/oder das Backup-Gerät (BG) und/oder der Backup-Speicher (BS) über ein globales Netzwerk (Nw) miteinander verbunden sind.

## Claims

1. Method for reproducing the sequence of a control program (P1) provided for process control in an automation device (AG), wherein
- a control program (P2) which corresponds, in terms of content, to the control program (P1) in the automation device (AG) with regard to process control is stored on a backup device (BG), wherein the backup device (BG) is provided for the purpose of reproducing the sequence of the control program (P1),
- the automation device (AG) is used to store an image (Ab) in a backup memory (BS) at at least one predefined or predefinable time during process control, wherein the image (Ab) represents an internal state of the automation device (AG) at this time,
- the automation device (AG) is used to transmit a release (F1, F2, ...) to the backup device (BG) during process control, in each case after the expiry of a predefined interval of time (Zi, i=1, 2, ...), wherein the releases (F1, F2, F3, F4) and process input values are stored in the backup memory (BS), and wherein the releases (F1, F2, F3, F4) indicate which processing sections (Va) of the control program (P1) in the automation device (AG) have already been processed by the automation device (AG) and indicate them to the backup device,
- the backup device (BG) is used to read the image (Ab) as well as the releases (F1, F2, F3, F4) and the process input values from the backup memory (BS),
- the backup device (BG) is used to process processing sections (Va) of its control program (P2), which correspond to those processing sections (Va) of the control program (P1) in the automation device (AG) which have already been processed, on the basis of the releases (F1, F2, F3, F4) and the process input values taking into account the image (Ab),
**characterized in that**, after the occurrence of an event (E), the automation device (AG) processes higher-priority processing sections (Va) during an interval of time (Z4) and carries out a thread change at a first time (t5) within the interval of time (Z4), wherein, after the expiry of the interval of time (Z4), the automation device (AG) transmits the release (F4) to the backup device (BG) at a time (t7) at which a first interruption point (P1_12) of the control program (P1), following the interval of time (Z4), occurs, and wherein the backup device (BG) reads the release (F4) and, on the basis of this release (F4), processes processing sections (Va) until a second interruption point (P2_12) of the backup device program (P2), wherein these processing sections (Va) correspond to the processing sections (Va) of the control program (P1) between the first (t5) and second (t7) times, and wherein the backup device (BG) likewise carries out a thread change.

2. Method according to Claim 1, **characterized in that** the backup device (BG) is used to process the control program (P2) in the backup device during the processing of the control program (P1) in the automation device (AG).

3. Method according to Claim 1, **characterized in that** the backup device (BG) is used to process the control program (P2) in the backup device (BG) after the processing of the control program (P1) in the automation device (AG).

4. Method according to one of Claims 1 to 3, **characterized in that** the automation device (AG) is used to produce an initial image at a first time during the processing of the control program (P1) in the automation device (AG).

5. Method according to Claim 4, **characterized in that** the backup device (BG) is used to produce intermediate images (Za) at further times during the processing of the control program (P2) in the backup device (BG) and to store them in the backup memory (BS).

6. Method according to Claim 4, **characterized in that** the automation device (AG) is used to produce intermediate images (Za) at further times and to store them in the backup memory (BS) .

7. Method according to one of Claims 1 to 6, **characterized in that** the automation device (AG) and/or the backup device (BG) and/or the backup memory (BS) are connected to one another via a global network (Nw).

8. Arrangement having an automation device (AG) and a backup device (BG), wherein the automation device (AG) processes a control program (P1) stored in this automation device (AG) for process control, and a control program (P2) which corresponds, in terms of content, to the control program (P1) in the automation device (AG) with regard to process control is stored on a backup device (BG), wherein the backup device (BG) is provided for the purpose of reproducing the sequence of the control program (P1),
- the automation device (AG) is designed to store an image (Ab) of its internal state in a backup memory (BS) at at least one predefined or predefinable time during process control,
- the automation device (AG) is also designed to transmit a release (F1, F2, ...) to the backup device (BG) during process control, in each case after the expiry of a predefined interval of time (Zi, i=1, 2, ...) of after the occurrence of an event (E), and to store the releases (F1, F2, F3, F4) and process input values in the backup memory (BS), wherein the releases (F1, F2, F3, F4) indicate which processing sections (Va) of the control program (P1) have already been processed by the automation device (AG),
- the backup device (BG) is designed to read the image (Ab) as well as the releases (F1, F2, F3, F4) and the process input values from the backup memory (BS),
- the backup device (BG) is also designed to process processing sections (Va) of its control program (P2), which correspond to those processing sections (Va) of the program (P1) in the automation device (AG) which have already been processed, on the basis of the releases (F1, F2, F3, F4) and the process input values taking into account the stored image (Ab),
**characterized in that**, after the occurrence of an event (E), the automation device (AG) is designed to process higher-priority processing sections (Va) during an interval of time (Z4) and to carry out a thread change at a first time (t5) within the interval of time (Z4), wherein, after the expiry of the interval of time (Z4), the automation device (AG) is also designed to transmit the release (F4) to the backup device (BG) at a time (t7) at which a first interruption point (P1_12) of the control program (P1), following the interval of time (Z4), occurs, and wherein the backup device (BG) is designed to read the release (F4) and, on the basis of this release (F4), to process processing sections (Va) until a second interruption point (P2_12) of the backup device program (P2), wherein these processing sections (Va) correspond to the processing sections (Va) of the control program (P1) between the first (t5) and second (t7) times, and wherein the backup device (BG) is likewise designed to carry out a thread change.

9. Arrangement according to Claim 8, **characterized in that** the backup device (BG) is designed to process its control program (P2) during the processing of the control program (P1) in the automation device (AG).

10. Arrangement according to Claim 8, **characterized in that** the backup device (BG) is designed to process its control program (P2) after the processing of the control program (P1) in the automation device (AG).

11. Arrangement according to Claims 8 to 10, **characterized in that** the automation device (AG) is designed to produce an initial image at a first time during the processing of its control program (P1).

12. Arrangement according to Claim 11, **characterized in that** the backup device (BG) is designed to produce intermediate images (Za) at further times during the processing of its control program (P2).

13. Arrangement according to Claim 11, **characterized in that** the automation device (AG) is designed to produce intermediate images (Za) at further times.

14. Arrangement according to one of Claims 7 to 13, **characterized in that** the automation device (AG) and/or the backup device (BG) and/or the backup memory (BS) are connected to one another via a global network (Nw).

## Revendications

1. Procédé de reproduction du déroulement d'un programme (P1) de commande, prévu pour la commande de processus, d'un appareil (AG) d'automatisation, dans lequel
- sur un appareil (BG) de backup est mis en mémoire un programme (P2) de commande, qui, au vu de la commande de processus, correspond, dans son contenu, au programme (P1) de commande de l'appareil (AG) d'automatisation, l'appareil (BG) de backup étant prévu pour la reproduction du déroulement du programme (P1) de commande,
- au moyen de l'appareil (AG) d'automatisation, on met, dans une mémoire (BS) de backup, une reproduction (Ab) pendant la commande de processus, à au moins un instant donné à l'avance ou pouvant l'être, la reproduction (Ab) représentant un état interne de l'appareil (AG) d'automatisation à cet instant,
- au moyen de l'appareil (AG) d'automatisation, on transmet, pendant la commande de processus, respectivement, après expiration d'un intervalle (Zi, i=1, 2, ...) de temps donné à l'avance à l'appareil (BG) de backup, une validation (F1, F2, ...), les validations (F1, F2, F3, F4) et des valeurs d'entrée de processus étant mises dans la mémoire (BS) de backup et les validations (F1, F2, F3, F4) indiquant les parties (Va) de traitement du programme (P1) de commande de l'appareil (AG) d'automatisation, que l'appareil (AG) d'automatisation a déjà traitées, et les indiquant à l'appareil de backup,
- au moyen de l'appareil (BG) de backup, on lit la reproduction (Ab), ainsi que les validations (F1, F2, F3, F4) et les valeurs d'entrée de processus, dans la mémoire (BS) de backup,
- au moyen de l'appareil (BG) de backup, sur la base des validations (F1, F2, F3, F4) et des valeurs d'entrée de processus, on traite, en tenant compte de la reproduction (Ab), des parties (Va) de traitement de son programme (P2) de commande, qui correspondent aux parties (Va) de traitement déjà traitées du programme (P1) de commande de l'appareil (AG) d'automatisation,
**caractérisé en ce que** l'appareil (AG) d'automatisation traite, après l'apparition d'un événement (E) pendant un intervalle (Z4) de temps, des stades (Va) de traitement de priorité plus grande et effectue, dans l'intervalle (Z4) de temps, à un premier instant (t5), un changement de thread, l'appareil (AG) d'automatisation transmettant, après l'expiration de l'intervalle (Z4) de temps, à l'appareil (BG) de backup, la validation (F4) à un instant (t7) où se produit un premier point (P1_12) d'interruption, suivant le premier intervalle (Z4) de temps, du programme (P1) de commande, et dans lequel l'appareil (BG) de backup lit la validation (F4) et sur la base de cette validation (F4) traite des parties (Va) de traitement jusqu'à un deuxième point (P2_12) d'interruption, ces parties (Va) de traitement correspondant aux parties (Va) de traitement du programme (P1) de commande entre le premier (t5) et le deuxième (t7) instants, et dans lequel l'appareil (BG) de backup effectue également un changement de thread.

2. Procédé suivant la revendication 1, **caractérisé en ce que** l'on traite le programme de commande de l'appareil (P2) de backup au moyen de l'appareil (BG) de backup pendant le traitement du programme (P1) de commande de l'appareil (AG) d'automatisation.

3. Procédé suivant la revendication 1, **caractérisé en ce que** l'on traite le programme (P2) de commande de l'appareil (BG) de backup au moyen de l'appareil (BG) de backup, après le traitement du programme (P1) de commande de l'appareil (AG) d'automatisation.

4. Procédé suivant l'une des revendications 1 à 3, **caractérisé en ce qu'**au moyen de l'appareil (AG) d'automatisation, on produit une reproduction initiale pendant le traitement du programme (P1) de commande de l'appareil (AG) d'automatisation à un premier instant.

5. Procédé suivant la revendication 4, **caractérisé en ce qu'**au moyen de l'appareil (BG) de backup, on produit des reproductions (Za) intermédiaires pendant le traitement du programme (P2) de commande de l'appareil (BG) de backup à d'autres instants et on les met dans la mémoire (BS) de backup.

6. Procédé suivant la revendication 4, **caractérisé en ce que**, au moyen de l'appareil (AG) d'automatisation, on produit des reproductions (Za) intermédiaires à d'autres instants et on les met dans la mémoire (BS) de backup.

7. Procédé suivant l'une des revendications 1 à 6, **caractérisé en ce que** l'on relie entre eux, par l'intermédiaire d'un réseau (Nw) global, l'appareil (AG) d'automatisation et/ou l'appareil (BG) de backup et/ou la mémoire (BS) de backup.

8. Système comprenant un appareil (AG) d'automatisation et un appareil (BG) de backup, l'appareil (AG) d'automatisation traitant, pour la commande de processus, un programme (P1) de commande mis en mémoire dans cet appareil (AG) d'automatisation et mettant en mémoire, dans un appareil (BG) de backup, un programme (P2) de commande, qui correspond dans son contenu, au vu de la commande de processus, au programme (P1) de commande de l'appareil (AG) d'automatisation, l'appareil (BG) de backup étant prévu pour la reproduction du déroulement du programme (P1) de commande, dans lequel
- l'appareil (AG) d'automatisation est constitué pour mettre, dans une mémoire (BS) de backup, pendant la commande de processus, à au moins un instant donné à l'avance ou pouvant l'être, une reproduction (Ab) de son état interne,
- l'appareil (AG) d'automatisation est constitué, en outre, pour transmettre une validation (F1, F2, ...) à l'appareil (BG) de backup, pendant la commande de processus, respectivement, après l'expiration d'un intervalle (Zi, i=1, 2, ...) de temps donné à l'avance ou après l'apparition d'un événement (E), et pour mettre des valeurs d'entrée de processus dans la mémoire (BS) de backup, les validations (F1, F2, F3, F4) indiquant les parties (Va) de traitement du programme (P1) de commande, que l'appareil (AG) d'automatisation a déjà traitées,
- l'appareil (BG) de backup est constitué pour lire dans la mémoire (BS) de backup la reproduction (Ab), ainsi que les validations (F1, F2, F3, F4) et les valeurs d'entrée de processus,
- l'appareil (BG) de backup est constitué, en outre, pour, en tenant compte de la reproduction (Ab) mise en mémoire, traiter, sur la base des validations (F1, F2, F3, F4) et des valeurs d'entrée de processus, des parties (Va) de traitement de son programme (P2) de commande, qui correspondent aux parties (Va) de traitement, déjà traitées, du programme (P1) de commande de l'appareil (AG) d'automatisation,
**caractérisé en ce que** l'appareil (AG) d'automatisation est constitué pour traiter, après l'apparition d'un événement (E) pendant un intervalle (Z4) de temps, des stades (Va) de traitement de priorité plus grande et pour effectuer, dans l'intervalle (Z4) de temps, à un premier instant (t5), un changement de thread, l'appareil (AG) d'automatisation étant constitué, en outre, pour transmettre, après l'expiration de l'intervalle (Z4) de temps, la validation (F4) à l'appareil (BG) de backup, à un instant (t7) où un premier point (P1_12 ) d'interruption suivant l'intervalle (Z4) de temps du programme (P1) de commande se produit et dans lequel l'appareil (BG) de backup est constitué pour lire la validation (F4) et, sur la base de cette validation (F4), traiter des parties (Va) de traitement jusqu'à un deuxième point (P2_12) d'interruption du programme (P2) BG, ces parties (Va) de traitement correspondant aux parties (Va) de traitement du programme (P1) de commande entre le premier (t5) et le deuxième (t7) instants et l'appareil (BG) de backup étant constitué également pour effectuer un changement de thread.

9. Système suivant la revendication 8, **caractérisé en ce que** l'appareil (BG) de backup est constitué pour traiter son programme (P2) de commande pendant le traitement du programme (P1) de commande de l'appareil (AG) d'automatisation.

10. Système suivant la revendication 8, **caractérisé en ce que** l'appareil (BG) de backup est constitué pour traiter son programme (P2) de commande après le traitement du programme (P1) de commande de l'appareil (AG) d'automatisation.

11. Système suivant la revendication 8 à 10, **caractérisé en ce que** l'appareil (AG) d'automatisation est constitué pour produire une reproduction initiale à un premier instant pendant le traitement de son programme (P1) de commande.

12. Système suivant la revendication 11, **caractérisé en ce que** l'appareil (BG) de backup est constitué pour produire des reproductions (Za) intermédiaires à d'autres instants pendant le traitement de son programme (P2) de commande.

13. Système suivant la revendication 11, **caractérisé en ce que** l'appareil (AG) d'automatisation est constitué pour produire des reproductions (Za) intermédiaires à d'autres instants.

14. Système suivant l'une des revendications 7 à 13, **caractérisé en ce que** l'appareil (AG) d'automatisation et/ou l'appareil (BG) de backup et/ou la mémoire (BS) de backup sont reliés entre eux par l'intermédiaire d'un réseau (Nw) global.
